# EUROPÄISCHE PATENTANMELDUNG

(11) **EP 4 344 538 A1**
(43) Veröffentlichungstag der Anmeldung: **03.04.2024**
(21) Anmeldenummer: 23199968.1
(22) Anmeldetag: 27.09.2023
(51) Int. Cl.: A01K 15/02

(54) **KRATZBAUM FÜR KATZEN**

(30) Priorität: 28.09.2022 DE 202022105449 U
(71) Anmelder: Hunter Holding GmbH & Co. KG, 32756 Detmold (DE)
(72) Erfinder: Thylmann, Carsten, 30159 Hannover (DE)
(74) Vertreter: Bittner, Thomas L.

(57) **Zusammenfassung**

Die Erfindung betrifft einen Kratzbaum (10) für Katzen, aufweisend: eine vertikale oder zur Vertikalen geneigte Säule (11); eine als Liegefläche für die Katze dienende, horizontale Plattform (14, 15, 16), welche an der Säule (11) befestigt ist, wobei die Säule (11) und zumindest ein Teilbereich der Plattform (16), welcher eine Aussparung (22) umgibt, einen steifen Werkstoff umfassende und tragende Elemente der Konstruktion des Kratzbaums (10) bilden; und ein als Liegefläche ausgebildetes Element (17) aus einem weichen und / oder mittelharten Werkstoff, welches einen hohlkugelförmigen, hohlteilkugelförmigen, hohlhalbkugelförmigen, hohlellipsoiden, hohlteilellipsoiden oder hohlparaboloiden Formabschnitt (18, 20) oder einen Formabschnitt eines hohlförmigen Rotationskörpers aufweist und in die Aussparung (22) der Plattform (16) eingelassen und / oder formschlüssig mit dieser verbunden ist. (Fig. 1)

## Beschreibung

Die Erfindung betrifft einen Kratzbaum für Katzen.

### Stand der Technik

Aus dem Dokument DE 20 2018 103 629 U1 sind Kratzbäume bekannt, die einen säulenartigen vertikalen Stamm umfassen sowie ein oder mehrere horizontale Plattformen, die in verschiedenen beabstandeten Höhenpositionen an dem vertikalen Stamm befestigt sind und den Katzen als Liegeflächen dienen. Der vertikale Stamm kann an seiner Oberfläche ein kratzfestes Fasermaterial wie Sisal, Hanf oder dergleichen aufweisen, welches den Katzen als Kratzoberfläche dient. Die Katzen können an dem vertikalen Stamm des Kratzbaums hochklettern und sich auf einer der Liegeflächen niederlassen.

Aus dem Dokument DE 20 2016 101 423 U1 ist ferner ein multifunktionaler Kratzbaum mit einer mehrstöckigen Struktur bekannt, bei dem säulenartige vertikale Elemente mit Plattformen, die als Liegeflächen dienen, sowie mit mehrseitig geschlossenen Hohlräumen mit Öffnungen kombiniert sind, die den Katzen als Versteck und als Kuschelhöhle dienen. Katzen sind Höhlentiere und fühlen sich daher in einer solchen Höhle sicher.

Im Dokument DE 20 2012 008 561 U1 wird zudem ein Kratzbaum beschrieben mit einem Stamm, einer Liegefläche und einer Katzenhöhle, wobei die Katzenhöhle und die Liegefläche jeweils auswechselbare Bezüge aus einem textilen Material wie Mikrofasern aufweisen, so dass man die Bezüge abnehmen und reinigen kann.

Weiterhin sind auch Kratzbäume für Katzen mit Liegeflächen nach Art einer Hängematte bekannt geworden. Bei diesen Kratzbäumen ist die in einem oberen Bereich an einer Säule angebrachte Liegefläche nur teilweise aus einem starren holzartigen Werkstoff gefertigt. Es ist ein erstes konstruktives Element aus Holz an der Säule befestigt und eine Leiste aus Holz verläuft in einem Abstand zu dem ersten konstruktiven Element, wobei zwischen diesen beiden konstruktiven Elementen eine Art Hängematte aus einem weichen Material gespannt ist, so dass diese nachgibt, wenn sich die Katze darauflegt. Die Hängematte kann aus einem Wollfilz aus Schurwolle bestehen. Die Hängematte ist bei diesem bekannten Kratzbaum an ihrem einen Ende an der Leiste so befestigt, dass sie die Leiste umschlingt, während sie an ihrem anderen Ende auf einer kleineren Platte aufliegt und an dieser befestigt ist. Zwischen der Leiste und der Platte erstreckt sich nur der Wollfilz der Hängematte, welcher entlang seiner Längsränder nicht befestigt ist, so dass die Hängematte bei Gewichtsbelastung, wenn sich eine Katze auf sie legt, etwas stärker durchhängt, was auch auf eine gewisse Dehnbarkeit des Wollfilzmaterials zurückzuführen ist. Das Wollfilzmaterial der Hängematte ist somit nicht formstabil und die Hängematte ist nur jeweils an ihren beiden querseitigen Enden befestigt. Die Katze liegt, wenn sie sich auf der Hängematte ausruht, mit ihrem Körper auf der Hängematte, so dass der bei einer Katzenhöhle gegebene Effekt, dass sich die Katze in die Höhle begibt und sich in dieser verstecken kann, nicht gegeben ist. Ein weiterer Nachteil einer Hängematte, so wie sie bei dem bekannten Kratzbaum ausgeführt und befestigt ist, besteht darin, dass es durch die Gewichtsbelastung beim Betreten der Hängematte durch die Katze zu unkontrollierten Schwingungen und Torsionen der Hängematte kommt.

### Zusammenfassung

Vor diesem Hintergrund besteht die Aufgabe darin, einen verbesserten Kratzbaum mit einem einer Katzenhöhle ähnlichen Hohlraum zu schaffen. Insbesondere soll sich die Katze verstecken können, wobei eine Verbindung zwischen der Katzenhöhle und den tragenden Teilen des Kratzbaums möglichst stabil sein soll und die Liegefläche keine unkontrollierten Bewegungen bei Gewichtsbelastungen vollführt, wenn sich die Katze auf die Liegefläche bewegt.

Zur Lösung ist ein Kratzbaum nach Anspruch 1 geschaffen. Ausgestaltungen sind Gegenstand der abhängigen Ansprüche.

Es ist vorgesehen, dass der Kratzbaum in einer Ausführung mindestens eine vertikale oder zur Vertikalen geneigte Säule, mindestens eine als Liegefläche für die Katze dienende, horizontale Plattform, welche an der Säule befestigt ist, wobei die Säule und zumindest ein Teilbereich der Plattform, welcher eine Aussparung umgibt, einen steifen Werkstoff umfassen und tragende Elemente der Konstruktion des Kratzbaums bilden, sowie mindestens ein als Liegefläche ausgebildetes Element aus einem weichen und / oder mittelharten Werkstoff, welches einen hohlkugelförmigen, hohlteilkugelförmigen, hohlhalbkugelförmigen, hohlellipsoiden, hohlteilellipsoiden oder hohlparaboloiden Formabschnitt oder einen Formabschnitt eines hohlförmigen Rotationskörpers aufweist und in die Aussparung der Plattform eingelassen und / oder formschlüssig mit dieser verbunden ist, umfasst.

Das als Liegefläche ausgebildete Element schafft somit einen höhlenartigen Liegeplatz für die Katze aus einem angenehm weichen und / oder mittelharten Material, wobei die Verbindung zwischen diesem Liegeplatz und der Plattform, auf dessen Höhe der Liegeplatz angeordnet ist, erheblich stabiler ist als bei einer zwischen zwei Befestigungslinien gespannten Hängematte, wie sie aus dem eingangs genannten Stand der Technik bekannt ist. Dadurch, dass das als Liegefläche ausgebildete Element bzw. der als höhlenartiger Liegeplatz ausgebildete Hohlraum in eine Aussparung der formstabilen Plattform aus dem tragenden, steifen Werkstoff eingelassen ist, wird das weiche und / oder mittelharte Material des Elements quasi ringsum von dem steifen Werkstoff positionsfest eingefasst. Mit anderen Worten kann sich dieses nicht bewegen, selbst dann nicht, wenn die Katze von der Plattform in das als Liegefläche ausgebildete Element springt, um sich dort niederzulassen. Es ergibt sich zwischen dem Element und dessen Einfassung am äußeren Umfang des Elements eine formschlüssige Verbindung, wodurch dieses keinen Bewegungsspielraum für laterale Bewegungen hat.

Die in den abhängig formulierten Ansprüchen einzeln aufgeführten Merkmale sind in technologisch sinnvoller Weise miteinander kombinierbar und können weitere Ausgestaltungen definieren.

Die Aussparung der Plattform kann einen Umriss aufweisen, welcher einer Umfangslinie der äußeren Mantelfläche des jeweiligen hohlförmig ausgebildeten Formabschnitts oder des Formabschnitts des hohlförmigen Rotationskörpers aus dem weichen und / oder mittelharten Werkstoff entspricht, der den Hohlraum umfasst. Abhängig von der konkreten Form des Formabschnitts ist diese Umfangslinie beispielsweise kreisförmig (bei einem kugelförmigen oder halbkugelförmigen Formabschnitt) oder elliptisch bei einem Ellipsoid. Die Herstellung der Plattform, in die das als Liegefläche ausgebildete Element eingelassen wird, ist vergleichsweise einfach. Beispielsweise kann die Plattform aus einem holzartigen und / oder einen Holz aufweisenden Werkstoff bestehen, wobei in diesen Werkstoff sodann eine kreisrunde oder elliptische Aussparung hineingefräst werden kann, in die dann das als Katzenhöhle dienende Element formschlüssig passend eingesetzt wird.

Gemäß einer Ausführungsvariante kann das als Liegefläche ausgebildete Element aus dem weichen und / oder mittelharten Werkstoff zu der Plattform parallel angeordnete Abschnitte umfassen, die die Plattform oberseitig bedecken, und die ggf. in den Formabschnitt übergehen. Bei dieser Variante kann man somit ein Bauteil aus dem weichen und / oder mittelharten Werkstoff anfertigen, welches einerseits einen Hohlraum umfasst und welches andererseits einen um diesen Bereich des Hohlraums herum ebenen Bereich des gleichen Werkstoffs aufweist, welcher sodann den von dem Formabschnitt definierten Hohlraum wie eine Art Kragen, bevorzugt ringsum, umgibt und sich von dem Hohlraum bzw. von dem den Hohlraum umfassenden Formabschnitt ausgehend radial nach außen hin erstreckt, so dass dieser Bereich des Kragens auf dem steifen Werkstoff der Plattform aufliegen kann. Man schafft so einerseits einen höhlenartigen Hohlraum, in dem die Katze sich geschützt und sicher fühlt, hat aber zusätzlich um diesen Hohlraum herum noch eine aus dem weichen und / oder mittelharten Material gepolsterte Liegefläche. Sowohl der Formabschnitt als auch das diesen umfassende Element können formstabil ausgeführt sein und bewegen sich somit nicht, auch wenn die Katze auf die Liegefläche oder in den Hohlraum umfassenden Formabschnitt springt. Dies ist ein erheblicher Vorteil gegenüber einer labilen, für Schwingungen und Torsionen anfälligen Hängematte, wie sie aus dem Stand der Technik bekannt ist.

Vorzugsweise sind bei der vorgenannten Ausgestaltung die die Plattform bedeckenden Abschnitte und der Formabschnitt des Elements aus dem weichen und / oder mittelharten Werkstoff einstückig ausgebildet. Dies bedeutet, dass gemäß dieser Variante der Erfindung ein einstückiges Element aus einem weichen und / oder mittelharten Werkstoff geformt und so dimensioniert wird, dass es mit einem mittleren, den Formabschnitt bildenden Bereich, in eine entsprechend große Aussparung in der Plattform passend eingelassen werden kann, während diejenigen Abschnitte des Elements, die den Formabschnitt kragenartig umgeben, flach sind und auf die Oberseite des steifen Werkstoffs der Plattform aufgelegt werden können, um diesen abzudecken und gegebenenfalls in geeigneter Weise mit diesem verbunden werden. Da der den Hohlraum umfassende Formabschnitt des als Liegefläche ausgebildeten Elements in die Aussparung eingreift, wird bereits - ohne gesonderte Befestigung - ein Verrutschen des Elements auf der Plattform verhindert. Gegebenenfalls kann zur zusätzlichen Befestigung ein Verkleben oder ein Verschrauben des als Liegefläche ausgebildeten Element mit den tragenden Elementen der Plattform vorgesehen sein.

Es kann vorgesehen sein, dass das als Liegefläche ausgebildete Element aus einem formstabilen Formvlies besteht. Das als Liegefläche ausgebildete Element kann aus einem Formvlies vorgeformt, beispielsweise gepresst werden und ist danach formstabil, das heißt anders als eine Hängematte lässt es sich nicht (jedenfalls nicht manuell mit normalem Kraftaufwand) tordieren oder verbiegen, sondern behält die gewählte Form dauerhaft. Auf diese Weise erhält man nach dem Einsetzen des den Hohlraum umfassenden Formabschnitts in die Aussparung der Plattform eine formschlüssige Verbindung und eine sehr stabile, dauerhafte Anordnung, die der Katze gleichzeitig als Katzenhöhle dient und auch noch eine lagesichere Liegefläche um die Katzenhöhle herum bietet.

Gemäß einer Ausführungsform ist der Formabschnitt aus dem weichen und / oder mittelharten Werkstoff hohlkugelförmig ausgebildet und weist mindestens eine Öffnung auf, deren Größe derart bemessen ist, dass eine Katze durch diese Öffnung in den hohlkugelförmigen Formabschnitt gelangen kann. Diese Öffnung befindet sich in der Regel bei in die Plattform eingelassenem Formabschnitt oberhalb der Ebene der Plattform. Bei dieser Variante bietet sich der Katze eine nahezu vollständig geschlossene Katzenhöhle, in der sie sich verstecken kann und sich sicher und geschützt fühlt.

Hierbei kann es so sein, dass sich der hohlkugelförmige Formabschnitt aus dem weichen und / oder mittelharten Werkstoff über den überwiegenden Teil seines Durchmessers oberhalb der Ebene der Plattform erstreckt, die Plattform durchdringt, sich aber nur zu einem geringeren Teil seines Durchmessers unterhalb der Plattform erstreckt.

Ferner kann vorgesehen sein, dass der hohlkugelförmige Formabschnitt teilweise lichtdurchlässig ausgebildet ist.

Bei einer weiteren Ausführungsform ist es hingegen so, dass der Formabschnitt zu seiner Oberseite hin offen ausgebildet ist, sodass sich ein Hohlraum von der Ebene der Plattform ausgehend nach unten hin erstreckt und der den Formabschnitt bildende weiche und / oder mittelharte Werkstoff auch die Oberseite der Plattform bedeckt. Gemäß dieser Ausführungsvariante kann der hohlförmige Formabschnitt beispielsweise die Form einer Halbkugel oder Teilkugel haben, wobei dieser dann von der Oberseite her über eine größere Öffnung zugänglich ist. Auch bei dieser Variante kann die Katze in dem den Hohlraum umfassenden Formabschnitt liegen, so dass sie darin nahezu vollständig aufgenommen wird, der Formabschnitt jedoch nach oben hin offen ist. Da der Formabschnitt bei dieser Variante nicht über die Plattform hinaus nach oben ragt, ergibt sich ein etwas anderes Design als bei der ersten Variante. Weiter hat diese Variante den Vorteil, dass sie oberseitig zur Plattform weniger Raum beansprucht. Der Formabschnitt bildet hier vielmehr eine vertiefte bzw. schalenartige Liegefläche aus. Die Katze kann bequem in dieser Vertiefung liegen und hat ähnlich wie bei einer vollständig geschlossenen Höhle ein Gefühl der Geborgenheit.

Gemäß Beispiel ist der Formabschnitt als flache Mulde ausgebildet und / oder der Werkstoff des Elements, insbesondere des Formabschnitts ist zu einem gewissen Grad flexibel ausgebildet. Ein derart ausgebildeter Formabschnitt kann somit auch flach sein. Der Werkstoff der Liegefläche muss nicht unbedingt aus formstabilem Formvlies oder dergleichen bestehen, sondern kann auch aus einem nachgiebigen Material bestehen, welches aber möglichst steifer sein sollte als ein reines Textilmaterial (beispielsweise ein Tuch oder dergleichen).

### Beschreibung von Ausführungsbeispielen

Im Folgenden werden weitere Aspekten unter Bezugnahme auf Figuren einer Zeichnung beschrieben. Hierbei zeigen:
- Fig. 1: eine perspektivische Gesamtansicht eines Kratzbaums gemäß einer beispielhaften Ausführungsvariante;
- Fig. 2: eine perspektivische Teilansicht der obersten Plattform des Kratzbaums von der Unterseite hergesehen;
- Fig. 3: eine perspektivische Explosionsdarstellung des oberen Bereichs eines beispielhaften Kratzbaums;
- Fig. 4: eine Seitenansicht des als Liegefläche ausgebildeten Elements; und
- Fig. 5: eine perspektivische Ansicht eines weiteren Kratzbaums.

Es ist möglich, soweit nicht explizit anders dargestellt, Teilaspekte der in den Figuren erläuterten Sachverhalte zu extrahieren und mit anderen Bestandteilen und Erkenntnissen aus der vorliegenden Beschreibung und / oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können.

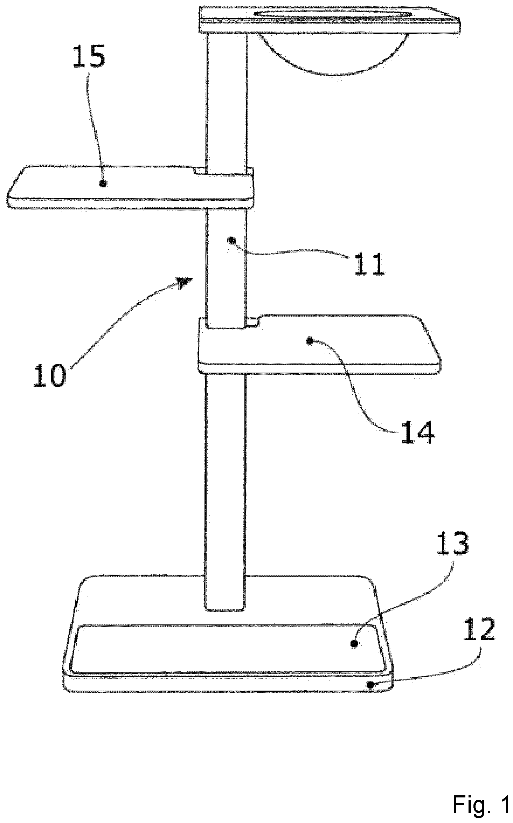

Nachfolgend wird zunächst auf die Fig. 1 Bezug genommen, wobei anhand dieser Darstellung ein erstes Ausführungsbeispiel eines Kratzbaums näher erläutert wird. Fig. 1 zeigt eine perspektivische Darstellung eines insgesamt mit dem Bezugszeichen 10 bezeichneten Kratzbaums, welcher eine beispielsweise im Umriss rechteckige Bodenplatte 12 aufweist, mit deren Unterseite der Kratzbaum 10 auf dem Untergrund steht. Auf dieser horizontalen Bodenplatte 12 kann sich eine Kratzfläche 13 aus einem kratzfesten Material, wie beispielsweise Sisal oder dergleichen befinden, die sich auf der Oberseite der Bodenplatte über eine Teilfläche oder auch beispielsweise über die Gesamtfläche der Bodenplatte 12 erstreckt. Von der Oberseite der Bodenplatte 12 aus nach oben ausgehend kann sich eine vertikale Säule 11 erstrecken, die sich beispielsweise von einem mittleren Bereich der Oberseite der Bodenplatte 12 aus vertikal nach oben hin erstreckt und an der in verschiedenen Höhen jeweils horizontale Plattformen 14, 15, 16 angebracht sind, die als Liegeflächen für die Katze dienen, nämlich eine erste Plattform 14 die mit Abstand zu der Bodenplatte 12 und parallel zu dieser sich von der vertikalen Säule 11 ausgehend zu einer ersten Seite des Kratzbaums 10 hin erstreckt, was bedeutet, dass sie etwa in ihrem einen Endbereich an der vertikalen Säule 11 angebracht ist und somit im Hinblick auf ihre Liegefläche außermittig und bevorzugt etwa in einem Eckbereich der Liegefläche mit der vertikalen Säule 11 verbunden ist.

Mit Abstand oberhalb der ersten Plattform 14 kann eine weitere horizontale und im Umriss beispielsweise rechteckige, zu dieser ersten Plattform 14 parallele zweite Plattform 15 angeordnet sein, die sich in der dargestellten Ausführungsvariante von der vertikalen Säule 11 ausgehend zu einer zweiten Seite des Kratzbaums 10 hin erstreckt, so dass die beiden Plattformen 14 und 15 eine gestaffelte Anordnung bilden. Jedoch sind im Rahmen der vorliegenden Offenbarung die Anordnung, die Umrissform und auch die Anzahl der vorhandenen Plattformen im Prinzip beliebig. Ein wesentlicher Aspekt betrifft die dritte, obere Plattform 16. Kratzbäume mit mehreren auch gestaffelt angeordneten Plattformen dieser Bauart sind aus dem Stand der Technik an sich bekannt.

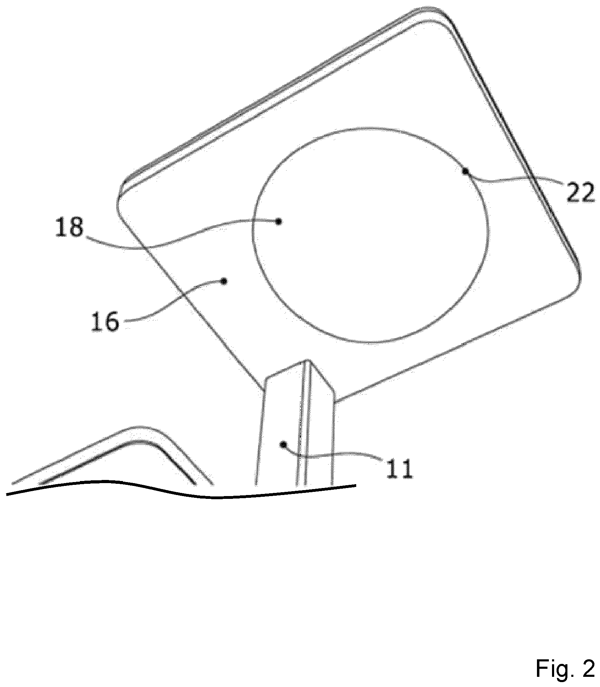

In Fig. 2 ist die obere Plattform 16 perspektivisch von unten gezeigt, während sie in der Fig. 1 von der Seite dargestellt ist, in leichter Perspektive von oben. Man sieht, dass auch die dritte obere Plattform 16 grundsätzlich einen rechteckigen äußeren Umriss aufweist und in einem Endbereich außermittig bezogen auf ihre Fläche an der vertikalen Säule 11 angebracht sein kann. Die obere Plattform 16 kann sich aus statischen Gründen, und zwecks besserer Nutzung als Liegefläche durch die Katze, zur gleichen Seite hin erstrecken wie eine der unteren Plattformen 14, 15, so dass sich alle drei Plattformen 14, 15, 16 jeweils abwechselnd zu der ersten oder der zweiten Seite der vertikalen Säule 11 hin erstrecken. Selbstverständlich können sich die Plattformen 14, 15, 16 auch jeweils in unterschiedliche Raumrichtungen erstrecken. Auch die obere Plattform 16 erstreckt sich horizontal und bildet in ihrem äußeren Bereich eine Fläche aus, auf der sich die Katze aufhalten kann. Im Unterschied zu den beiden Plattformen 14 und 15 ist die obere Plattform 16 jedoch nicht flächig durchgehend aus dem gleichen Material, wie beispielsweise einem Holzwerkstoff ausgebildet, sondern weist in ihrem mittleren Bereich eine in Fig. 2 erkennbare runde, insbesondere kreisrunde Aussparung 22 auf.

Während somit der äußere Teilbereich der Plattform 16 aus einem steifen Werkstoff, wie beispielsweise Holz, einem Holzwerkstoff, einem Kunststoff oder einem Verbundmaterial besteht und ein tragendes Element der Konstruktion des Kratzbaums 10 bildet, welches mit der vertikalen Säule 11 verbunden ist, ist in die Aussparung 22 ein als Liegefläche ausgebildetes Element 17 aus einem weichen und / oder mittelharten Werkstoff eingelassen. Wie anhand der Darstellung erkennbar, ist das als Liegefläche ausgebildete Element 17 nicht eben ausgebildet, sondern weist in dieser Ausführungsform einen teilkugelfömigen Formabschnitt 18 auf, der hohlförmig ausgebildet ist und demnach eine Art Höhle bildet, in der die Katze geschützt und auf einer angenehm weichen Fläche liegen kann.

In einer alternativen Ausführungsvariante kann der Formabschnitt 18 auch hohlkugelförmig, hohlellipsoid, hohlteilellipsoid oder hohlparaboloid ausgebildet sein oder die Form eines hohlförmigen Rotationskörpers aufweisen, welcher in die Aussparung 22 der Plattform 16 eingelassen ist. Das als Liegefläche ausgebildete Element 17 kann zum Beispiel aus einem formstabilen Formvlies bestehen.

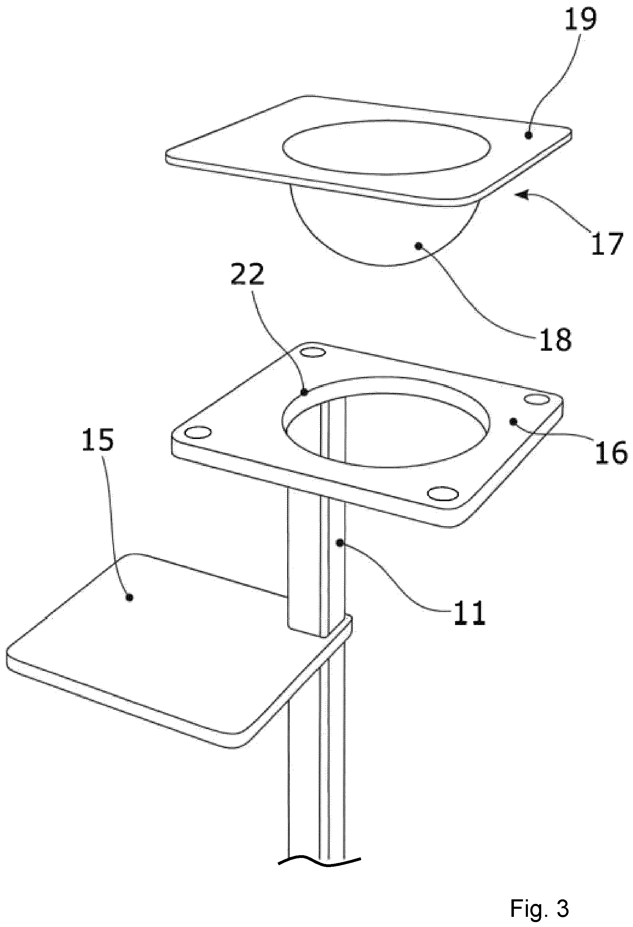

In Fig. 3 ist der obere Bereich des Kratzbaums 10 in einer Explosionsansicht dargestellt. Anhand dieser Darstellung ist erkennbar, dass der hohlteilkugelförmig ausgebildete Formabschnitt 18 des als Liegefläche ausgebildeten Elements 17 so dimensioniert ist, dass dieser formschlüssig in die Aussparung 22 der oberen Plattform 16 hineinpasst und im montierten Zustand durch die Aussparung in der Plattform 16 nach unten hindurch ragt. Dieser Formabschnitt 18 kann zusammen mit einem diesen allseits umgebenden ebenen horizontalen Kragen 19 einstückig ausgebildet sein, wobei dann dieser Kragen 19 im montierten Zustand auf der Plattform 16 aufliegt, so dass für die Katze auch in diesem Bereich der Plattform 16, der eben ausgebildet ist und die Aussparung 22 umgibt, durch das weiche und / oder mittelharte Material des Elements 17 eine angenehme Liegefläche gebildet ist.

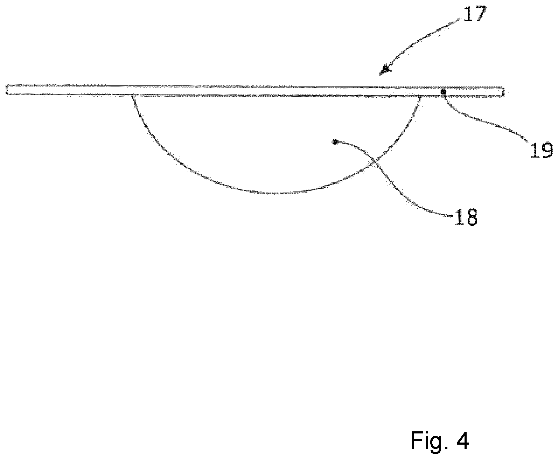

Fig. 4 zeigt das als Liegefläche ausgebildete Element 17 in der Seitenansicht. Erkennbar ist hierbei zum einen der hohlteilkugelförmige bzw. topfförmige Formabschnitt 18, in dem die Katze liegen kann sowie der oberseitige Kragen 19, der den Formabschnitt 18, wie eine Art Flansch allseits umgibt.

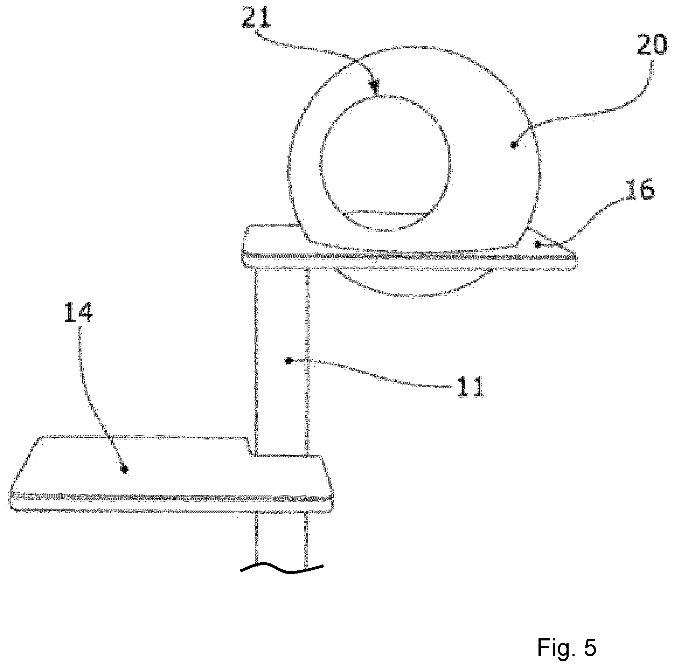

Fig. 5 zeigt eine alternative Ausgestaltung eines Kratzbaums 10 in einer perspektivischen Ansicht, in der das als Liegefläche ausgebildete Element 17 aus einem weichen und / oder mittelharten Werkstoff, wie zum Beispiel einem formstabilen Formvlies, einen hohlkugelförmig ausgebildeten Formabschnitt 20 aufweist, der in die Aussparung 20 der oberen Plattform 16 eingelassen ist. Wie anhand der Fig. 5 erkennbar, weist dieser eine Öffnung 21 auf, durch die die Katze in das Innere des Formabschnitts 20 gelangt, so dass sie darin, wie in einer Art Höhle liegen kann. Katzen lieben es, in derartigen höhlenartigen Räumen geschützt zu liegen. Anhand der Fig. 5 ist weiterhin erkennbar, dass der hohlkugelförmig ausgebildete Formabschnitt 20 mit einem Kugelsegment durch die entsprechend dimensionierte Aussparung 22 in der Plattform 16 sich nach unten hindurch erstreckt, so dass der hohlkugelförmige Formabschnitt 20 formschlüssig in der Aussparung 22 aufgenommen und in der Plattform 16 gehalten wird. Außerhalb des hohlkugelförmigen Formabschnitts 20 ist für die Katze zudem auf der übrigen Fläche der Plattform 16 ausreichend Platz als Lauffläche und gegebenenfalls auch als Liegefläche vorhanden.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 10: Kratzbaum
- 11: vertikale Säule
- 12: Bodenplatte
- 13: Kratzfläche
- 14: erste Plattform
- 15: zweite Plattform
- 16: dritte, obere Plattform
- 17: als Liegefläche ausgebildetes Element
- 18: Formabschnitt / topfförmiger Formabschnitt / hohlförmiger Formabschnitt
- 19: Kragen
- 20: hohlkugelförmiger Formabschnitt
- 21: Öffnung
- 22: Aussparung

## Patentansprüche

1. Kratzbaum (10) für Katzen, aufweisend:
- eine vertikale oder zur Vertikalen geneigte Säule (11);
- eine als Liegefläche für die Katze dienende, horizontale Plattform (14, 15, 16), welche an der Säule (11) befestigt ist, wobei die Säule (11) und zumindest ein Teilbereich der Plattform (16), welcher eine Aussparung (22) umgibt, einen steifen Werkstoff umfassende und tragende Elemente der Konstruktion des Kratzbaums (10) bilden; und
- ein als Liegefläche ausgebildetes Element (17) aus einem weichen und / oder mittelharten Werkstoff, welches einen hohlkugelförmigen, hohlteilkugelförmigen, hohlhalbkugelförmigen, hohlellipsoiden, hohlteilellipsoiden oder hohlparaboloiden Formabschnitt (18, 20) oder einen Formabschnitt eines hohlförmigen Rotationskörpers aufweist und in die Aussparung (22) der Plattform (16) eingelassen und / oder formschlüssig mit dieser verbunden ist.

2. Kratzbaum (10) nach Anspruch 1, **dadurch gekennzeichnet, dass** die Aussparung (22) der Plattform (16) einen Umriss aufweist, welcher einer Umfangslinie der äußeren Mantelfläche des Formabschnitts (18, 20) entspricht.

3. Kratzbaum (10) nach Anspruch 1 oder 2, **dadurch gekennzeichnet**, das als Liegefläche ausgebildete Element (17) die Plattform (16) oberseitig bedeckende, zur Plattform (16) parallel angeordnete Abschnitte (19) umfasst, die vorzugsweise in den Formabschnitt (18, 20) des Elements (17) übergehen.

4. Kratzbaum (10) nach Anspruch 3, **dadurch gekennzeichnet**, die die Plattform (16) bedeckenden Abschnitte (19) und der Formabschnitt (18, 20) des Elements (17) einstückig ausgebildet sind.

5. Kratzbaum (10) nach einem der vorhergehenden Ansprüche, **dadurch gekennzeichnet, dass** das als Liegefläche ausgebildete Element (17) aus einem formstabilen Formvlies besteht.

6. Kratzbaum (10) nach einem der vorhergehenden Ansprüche, **dadurch gekennzeichnet, dass** das als Liegefläche ausgebildete Element (17) mit den tragenden Elementen der Plattform (16) mittels Verschrauben, Verkleben oder geeignete andere Befestigungsmittel verbunden ist.

7. Kratzbaum (10) nach einem der vorhergehenden Ansprüche, **dadurch gekennzeichnet, dass** der Formabschnitt (18) zu seiner Oberseite hin offen ausgebildet ist, sodass sich von der Ebene der Plattform (16) ausgehend nach unten hin ein Hohlraum erstreckt und der den Formabschnitt (18) bildende weiche und / oder mittelharte Werkstoff auch die Oberseite der Plattform (16) bedeckt.

8. Kratzbaum (10) nach einem der vorhergehenden Ansprüche, **dadurch gekennzeichnet, dass** der Formabschnitt (18) als flache Mulde ausgebildet ist und / oder dass der Werkstoff des Elements (17), insbesondere des Formabschnitts (18), zu einem gewissen Grad flexibel ausgebildet ist.

9. Kratzbaum (10) nach einem der vorhergehenden Ansprüche 1 bis 6, **dadurch gekennzeichnet, dass** der Formabschnitt (18, 20) hohlkugelförmig ausgebildet ist und mindestens eine Öffnung (21) aufweist, deren Größe derart bemessen ist, dass eine Katze durch diese Öffnung (21) in den hohlkugelförmigen Formabschnitt (20) gelangen kann.

10. Kratzbaum (10) nach Anspruch 9, **dadurch gekennzeichnet, dass** der hohlkugelförmige Formabschnitt (20) bereichsweise lichtdurchlässig ausgebildet ist.

11. Kratzbaum (10) nach Anspruch 9 oder 10, **dadurch gekennzeichnet, dass** sich der hohlkugelförmige Formabschnitt (20) über einen überwiegenden Teil seines Durchmessers oberhalb der Ebene der Plattform (16) erstreckt, die Plattform (16) 20 durchdringt und sich nur zu einem geringeren Teil seines Durchmessers unterhalb der Plattform (16) erstreckt.
